Europäisches Patentamt

European Patent Office

Office européen des brevets

(11) Publication number: **0 361 931 B1**

## EUROPEAN PATENT SPECIFICATION

(45) Date of publication of patent specification: **07.07.93**   (51) Int. Cl.⁵: **C10M 171/00**

(21) Application number: **89309910.1**

(22) Date of filing: **28.09.89**

The file contains technical information submitted after the application was filed and not included in this specification

(54) **Non-aqueous electro-rheological fluid.**

(30) Priority: **28.09.88 JP 240896/88**

(43) Date of publication of application:
**04.04.90 Bulletin  90/14**

(45) Publication of the grant of the patent:
**07.07.93 Bulletin  93/27**

(84) Designated Contracting States:
**DE FR GB**

(56) References cited:
**JP-A- 5 317 585**
**US-A- 3 047 507**
**US-A- 3 367 872**

**SOVIET INVENTATIONS ILLUSTRATED, week C-39, 8th November 1980, section Chemical, abstract no. H08 A85 E17 L03, Derwent Publications Ltd, London GB; & SU-A-715 596 (AS. PHYS. CHEM. INST.) 20-02-1980**

**CHEMICAL ABSTRACTS, vol. 96, no. 6, 8th February 1982, page 420, abstract no. 41469k, Columbus, Ohio, US; A.A. TRAPEZNIKOV et al.: "Electrorheological properties of non-aqueous dispersions of titanium dioxide and silicon dioxide in relation to the concentra-**

tion and moisture content of a filler", & KOLLOIDN. ZH. 1981, 43(6), 1134-40

**Winslow, J. of Applied Physics 20, 1137 (1949)**

(73) Proprietor: **Tonen Corporation**
**1-1 Hitotsubashi, 1-Chome Chiyoda-Ku**
**Tokyo 100(JP)**

(72) Inventor: **Kanbara, Makoto Tonen Corp. Corporate**
**Research & Development Lab. 3-1, Nishi-tsurugaoka**
**1-chome Ohimachi Iruma-gun Saitama(JP)**
Inventor: **Tomizawa, Hirotaka Tonen Corp. Corporate**
**Research & Development Lab. 3-1, Nishi-tsurugaoka**
**1-chome Ohimachi Iruma-gun Saitama(JP)**

(74) Representative: **Baverstock, Michael George Douglas et al**
**BOULT, WADE & TENNANT 27 Furnival Street London, EC4A 1PO (GB)**

## Description

The present invention relates to an electro-rheological fluid, the viscosity of which can be controlled by application of an electrical field (voltage). More particularly, the present invention relates to a non-aqueous electro-rheological fluid composed mainly of an electrically insulating fluid and an inorganic solid particle, in which the defects of the conventional electro-rheological fluids comprising water are eliminated.

An electro-rheological fluid (also called "electroviscous fluid" and abbreviated to ER fluid), the viscosity of which is changed by application of an electrical field (voltage), is well known. Namely, the ER fluid was discovered at the end of the 19th century [Duff, A.W., Physical Review, Vol. 4, No. 1, 23 (1896)].

Initial investigations concerning ER fluids were directed to a system composed solely of a liquid, and the effect was unsatisfactory, but then the investigations were turned toward a fluid of the solid dispersion system and a considerable improvement was obtained. For example, Winslow proposed an ER fluid comprising paraffin and silica gel powder, in which water is incorporated to render the system slightly electroconductive [Winslow, W.H., J. of Applied Physics, Vol. 20, 1137 (1949)]. Due to this study by Winslow, the electro-viscous effect possessed by the ER fluid is called an ER effect or Winslow effect.

The mechanism of the manifestation of the viscosity-increasing effect (ER effect) has been further elucidated and, for example, Klass explains that respective particles constituting the dispersed phase of the fluid cause an induced polarization of the double layer in the electric field, and that this is the main cause of the ER effect [Klass, D.L., et al., J . of Applied physics, Vol. 38, 67 (1967)].

This will now be described with reference to the electric double layer. If the electrical field is zero (E = 0), the ion absorbed on the periphery of the dispersed phase (silica gel or the like) is uniformly arranged on the outer surface of the dispersed phase, but if the electrical field (E) is a definite value, polarization occurs in the ion distribution and the respective particles impart an electrostatic action to one another in the electrical field, and thus the respective particles of the dispersed phase form a bridge (cross-linkage) and the shear-resistant force to an external stress, i.e., the ER effect, is manifested.

In the above-mentioned ER fluid of the solid particle dispersion system, various proposals have been made for improving the viscosity characteristics and stability of the ER fluid while taking the mechanism of the manifestation of the ER effect into consideration. For example, the use of a ferroelectric powder and a fine powder of silicon dioxide having a small amount of water adsorbed therein (Japanese Unexamined Patent Publication No. 53-17585), the use of a high-molecular-weight dispersant having a functional group for stabilizing a dispersion system comprising a silica gel containing 1 to 15% by weight of water as the dispersed phase and a silicone oil as the liquid phase (Japanese Unexamined Patent Publication No. 61-44998), and the addition of a water-soluble electrolyte to a cellulose crystallite aggregate as the dispersed phase (Japanese Examined Patent Publication No. 57-47234), have been proposed.

Other electro-rheological fluids comprising a liquid phase and a dispersed particulate phase in which the particulate phase includes water are described in US-A-3367872, US-A-3047507 and Chemical Abstract No 96.41469k (1981).

Separately, non-aqueous electro-rheological fluids have been proposed for eliminating the defects of the above-mentioned aqueous electro-rheological fluids, caused by water present in the system, such as the instability of the temperature characteristics, corrosion of the apparatus, and limitation of the operation temperature. For example, there has been proposed a non-aqueous electro-rheological fluid comprising a dielectric fine particle having a three-layer structure comprising an organic solid particle, an electroconductive thin film layer formed on the outer surface of the organic solid particle and an electrically insulating thin film layer, and an electrically insulating liquid (Japanese Unexamined Patent Publication No. 63-97694), and a non-aqueous electro-rheological fluid comprising an organic semiconductor such as an unsaturated condensed polycyclic compound as the electronic conductor and an electrically insulating liquid (Japanese Unexamined Patent Publication No. 61-216202). Further a non-aqueous electro-rheological fluid in paste form containing dispersed particles of titanium dioxide is described in SU-A-715596.

Nevertheless, despite these proposals, conventional ER fluids still have an unsatisfactory performance with regard to response upon application of an electrical field (voltage), reproducibility of the ER effect, degree of the viscosity-increasing effect, and maintenance of the stable ER effect for a long time. In the case of the non-aqueous electro-rheological fluid, the preparation of the solid fine particle to be used, or the organic semiconductor which is an electronic conductor, is complicated and the solid fine particle or organic semiconductor is expensive. Especially in the aqueous ER fluid, since water is used, water is rapidly evaporated at high temperatures exceeding 80°C and the viscosity-increasing effect is reduced. Furthermore, even at temperature lower than 80°C, the viscosity fluctuates under a constant voltage and is unstable.

EP 0 361 931 B1

The present inventors carried out investigations with a view to solving the above-mentioned problems involved in the conventional ER fluids, and as a result found that, by using a dielectric fine particle composed of an inorganic solid particle having a low electro-conductivity, inclusive of a semiconductor, instead of the solid particle having water adsorbed thereon, the ER effect can be stably maintained even at high temperatures, and that the other properties required for ER fluids are satisfactory. The present invention was completed based on this finding.

In accordance with the present invention, there is provided a non-aqueous electro-rheological fluid, which comprises an electrically insulating liquid as the dispersion medium, a dielectric inorganic fine particle as the dispersed phase and a dispersing agent, wherein the weight ratio of the electrically insulating liquid to the inorganic solid particle is from 95/5 to 70/30, the inorganic solid particle has an electric resistance value of $10^{-2}$ to $10^{16}$ $\Omega$cm, inclusive of a semiconductor, and the dispersing agent is selected from the group consisting of sulfonates, phenates, phosphonates and succinimides and amines.

The construction of the present invention will now be described in detail.

The kind of electrically insulating liquid used as the dispersion medium in the present invention is not particularly critical, and any electrically insulating liquid having an electrically insulating property can be used. For example, mineral oils and synthetic lubricating oils can be used as the electrically insulating liquid of this type.

More specifically, there can be mentioned a naphthene type mineral oil, a paraffin type mineral oil, a poly-$\alpha$-olefin, a polyalkylene glycol, a silicone, a diester, a polyol ester, a phosphoric acid ester, a silicon compound, a fluorine compound, a halogenated aromatic liquid, a polyphenyl ether, and a synthetic hydrocarbon. Preferably, the viscosity of the electrically insulating liquid used is 5 to 300 cp as measured at 40°C.

The dielectric fine particle which is used as the dispersed phase in the ER fluid of the present invention, i.e., the inorganic solid particle having a low electroconductivity, inclusive of a semiconductor, will now be described.

The inorganic solid particle having a low electroconductivity, inclusive of a semiconductor, which is used in the present invention, has an electric resistance value of $10^{-2}$ to $10^{16}$ $\Omega$-cm, and preferably, the inorganic solid particle has a high polarizability (dielectric constant).

As the inorganic solid particle of the type having a low electroconductivity, inclusive of a semiconductor, there can be mentioned element semiconductors and compound semiconductors. Examples of the inorganic solid particle that can be used in the present invention are as follows.

Elements of Group IV:
   Si and Ge.
Elements of Group VI:
   Se and Te.
Element of Group IV/Element of Group IV Compounds:
   SiC and GeSi
Element of Group I/Element of Group VI Compounds:
   Compounds between Ag or Cu and O or S.
Element of Group II/Element of Group VI Compounds:
   Compounds between Mg, Zn, Cd or Hg and O, S, Se or Te.
Element of Group III/Element of Group VI Compounds:
   Oxides of Al, La and Ce.
Element of Group IV/Element of Group VI Compounds:
   Compounds between Pb, Sn, Ti or Zr and O, S, Se or Te.
Element of Group V/Element of Group VI Compounds:
   Compounds between Sb, Bi or Ta and O or S.
Element of Group VI/Element of Group VI Compounds:
   Oxides of Nb, W, Mo and Cr.
Element of Group VII/Element of Group VI Compounds:
   $MnO_2$.
Element of Group VIII/Element of Group VI Compounds:
   Oxides of Fe, Co and Ni.
Element of Group III/Element of Group V Compounds:
   Compounds between B, Al, Ga or In and N, P, As or Sb.
Element of Group III/Element of Group IV Compounds:
   $B_4C$.
Element of Group II/Element of Group V Compounds:

3

Compounds between Zn or Cd and Sb or As.

Ternary Compounds:

$BaTiO_3$.

Among the above, element of group IV/element of group IV compounds, element of group II/element of group VI compounds, element of group III/element of group VI compounds, element of group IV/element of group VI compounds, element of group III/element of group IV compounds, and element of group III/element of group V compounds are preferred.

The inorganic solid particle having a low electroconductivity, inclusive of a semiconductor, has an average particle size smaller than 10 $\mu$m, preferably smaller than 1 $\mu$m, and preferably the particle size distribution is as close to the monodisperse system as possible.

In the present invention, the electrically insulating liquid and the inorganic solid particle are used at a weight ratio of from 95/5 to 70/30.

In the present invention, a dispersant can be used for uniformalizing and stabilizing the dispersion state of the inorganic solid particle in the dispersion medium, and dispersants customarily used in this field can be used. For example, there can be mentioned sulfonates, phenates, phosphonates, succinic acid imides, amines and non-ionic dispersants.

More specifically, there can be mentioned magnesium sulfonate, calcium sulfonate, calcium phenate, calcium phosphonate, and polybutenyl succinic acid imide, The dispersant is generally used in an amount of 0.1 to 10% by weight. If the dispersibility of the solid particle is good in the absence of the dispersant, the dispersant need not be used.

In the present invention, by making an inorganic solid particle having a low electroconductivity, inclusive of a semiconductor, present as a constituent of the ER fluid instead of the solid particle having water adsorbed thereon, excellent effects can be obtained over a broad temperature range including high temperatures with respect to the responsivity of the change of the viscosity, the reproducibility, the stability over a long period, and the viscosity-increasing effect (the increase ratio of the viscosity under application of an electrical field to the viscosity at an electrical field of 0).

At present, the mechanism of the manifestation of the ER effect has not been fully elucidated, but the following assumptions can be made about the reasons why such excellent effects can be obtained according to the present invention.

In a conventional ER fluid consisting of a mineral oil, water and a solid particle, it has been thought that the ER effect is based on the following facts. That is, water adsorbed on each solid particle forms a thin water film, causes an induced polarization in the electric field by the polarity, and extends in the direction of the electric field to start the formation of a crosslinkage (bridge) between the solid particles. Thus, a crosslinkage (bridge) is formed between the electrodes and the viscosity is increased in the direction perpendicular to the electric field, thereby manifesting the ER effect.

Therefore, the thickness of the water film is important for the manifestation of the ER effect, but since the molecular weight of water is low and is easily evaporated, the thickness of the water film is apt to change according to changes of the outer environment, especially changes of the temperature, and this change of the water film thickness renders the ER effect unstable.

In the present invention, the above-mentioned inorganic solid particle is used instead of the solid particle having water adsorbed thereon. This inorganic solid particle is far superior to water in regard to the stability thereof against changes of the temperature.

In general, when an electrical field is applied to a substance, an induced polarization occurs in the substance. When an electrical field is not applied from the outside, in most inorganic substances, the centers of the positive and negative charges are in agreement with each other. But if an electrical field is applied from the outside, the action of this exterior electrical field causes the positive charge to be attracted toward the negative pole and the negative charge to be attracted toward the positive pole, with the result that the centers of the positive and negative charges are relatively shifted to generate an electrical bipolar moment. This phenomenon is known as reduced polarization.

In the case of a polar substance, the centers of the positive and negative charges deviate from each other even in the absence of the action of an electrical field, but since the respective molecules move freely in any direction due to the thermal agitation, the polarization of the substance as a whole is zero. Nevertheless, if an electrical field is applied, a bipolar moment is induced in the direction of the electrical field, to cause polarization.

This induced polarization causes the inorganic solid particles to be polarized in the dispersion medium, and the polarized particles mutually oriented to form a strong crosslinkage (bridge) of the particles between the electrodes. If, however, the inorganic solid particle is electrically conductive, a large quantity of an electric current flows, to increase the energy consumption, and moreover, since a sufficient voltage cannot be applied, a strong crosslinkage cannot be formed.

In contrast, in the case of an inorganic solid particle having a low electroconductivity, inclusive of a semiconductor, an appropriate quantity of an electric current flows to enhance the mutual orientation, whereby a strong crosslinkage is formed in the particles between the electrodes. It is considered that, for the above-mentioned reasons, an ER fluid which is stable and has a large viscosity-increasing effect over a broad temperature range, including high temperatures, can be obtained according to the present invention.

The present invention will now be described in detail with reference to the following examples.

Example 1 through 21

(i) Preparation of ER Fluid

An ER fluid was prepared by thoroughly mixing and stirring 15% by weight of a solid particle and 5% by weight of a dispersant (succinic acid imide), with the balance being a mineral oil. The inorganic solid particle used is shown in Table 1.

Comparative Example 1

(i) Preparation of ER Fluid

An ER fluid was prepared by thoroughly mixing and stirring 4% by weight of a silica gel containing 7% by weight of water and 4% by weight of a dispersant (succinic acid imide), with the balance being a mineral oil.

## Table 1

| Example No. | Dispersion Medium | Inorganic Solid Particle | Dispersion Medium/Inorganic Solid Particle Weight Ratio |
|---|---|---|---|
| 1 | mineral oil | Si | 5.3/1 |
| 2 | " | $Cu_2O$ | " |
| 3 | " | MgO | " |
| 4 | " | ZnO | " |
| 5 | " | ZnS | " |
| 6 | " | $Al_2O_3$ | " |
| 7 | " | $La_2O_3$ | " |
| 8 | " | $TiO_2$ | " |
| 9 | " | $ZrO_2$ | " |
| 10 | " | $Ta_2O_5$ | " |
| 11 | " | $CeO_2$ | " |
| 12 | " | $WO_3$ | " |
| 13 | " | $MnO_2$ | " |
| 14 | " | $Fe_2O_3$ | " |
| 15 | " | CoO | " |
| 16 | " | NiO | " |
| 17 | " | $B_4C$ | " |
| 18 | " | BN | " |
| 19 | " | AlN | " |
| 20 | " | $BaTiO_3$ | " |
| 21 | " | $Nb_2O_5$ | " |

## Note

In each sample, the viscosity of the mineral oil was adjusted so that the viscosity of the fluid was 40 cp (40°C).

(ii) Experimental Conditions and Items of Evaluation of ER Fluids

The ER fluids were maintained at 90°C, and the ER fluids were evaluated with respect to the following items, by using a rotational viscometer where application of a voltage was possible.

(a) Responsitivity

The responsitivity was evaluated based on the time (seconds) required for stabilization of the viscosity when the electrical field was changed from zero to $3 \times 10^6$ (V/m).

(b) Reproducibility

The cycle of the change of the electrical field of $0 \rightarrow 3 \times 10^6$ (V/m) $\rightarrow 0$ was repeated, and the reproducibility was evaluated based on the ratio (%) of the change of the viscosity at the electrical field of $3 \times 10^6$ (V/m).

(c) Stability

An electrical field of $3 \times 10^6$ (V/m) was constantly applied, and the ratio (%) of the change of the viscosity with a lapse of time was measured, to evaluate the stability (the measurement time was 1 hour).

(d) Viscosity-Increasing Effect

The viscosity-increasing effect was evaluated based on the ratio of the viscosity at an electrical field of $3 \times 10^6$ (V/m) to the viscosity at an electrical field of 0 (V/m).

(iii) The results are shown in Table 2.

Table 2

| Example No. | Responsi-tivity (seconds) | Reprodu-cibility (%) | Stability (%) | Viscosity-Increasing Effect (times) |
|---|---|---|---|---|
| 1 | less than 1 | ± 2 | ± 2 | 3 |
| 2 | " | " | " | 3 |
| 3 | " | " | " | 4 |
| 4 | " | " | " | 5 |
| 5 | " | ± 5 | " | 1.5 |
| 6 | " | ± 4 | " | 3 |
| 7 | " | ± 2 | " | 3 |
| 8 | " | " | " | 3 |
| 9 | " | " | " | 5 |
| 10 | " | " | " | 2 |
| 11 | " | " | " | 7 |
| 12 | " | " | " | 2 |
| 13 | " | " | " | 2 |
| 14 | " | ± 3 | " | 3 |
| 15 | " | " | " | 2 |
| 16 | " | " | " | 3 |
| 17 | " | " | " | 5 |
| 18 | " | " | " | 2 |
| 19 | " | " | " | 2 |
| 20 | " | " | " | 2 |
| 21 | " | ± 5 | " | 1.5 |
| Comparative Example 1 | 20 - 200 | ± 20 | ± 10 | 1.1 - 1.3 |

As apparent from the foregoing description, the electro-rheological fluid (ER fluid) of the present invention has a very high stability and a large viscosity-increasing effect over a broad temperature range including high temperatures. Moreover, the ER fluid of the present invention is far superior to the conventional ER fluids in responsitivity and reproducibility.

Accordingly, the ER fluid of the present invention is valuable for use in a control apparatus utilizing the change of the viscosity, whereby the control precision especially the control precision at a high temperature, thereof is greatly improved.

**Claims**

1. A non-aqueous electro-rheological fluid, which comprises an electrically insulating liquid as the dispersion medium, a dielectric inorganic fine particle as the dispersed phase and a dispersing agent, wherein the weight ratio of the electrically insulating liquid to the inorganic solid particle is from 95/5 to 70/30, the inorganic solid particle has an electric resistance value of $10^{-2}$ to $10^{16}$ $\Omega$-cm, inclusive of a semiconductor, and the dispersing agent is selected from the group consisting of sulfonates, phenates, phosphonates and succinimides and amines.

2. An electro-rheological fluid as set forth in claim 1, wherein the electrically insulating liquid is selected from the group consisting of naphthene type mineral oils, paraffin type mineral oils, poly-$\alpha$-olefins, polyalkylene glycols, silicones, diesters, polyol esters, phosphoric acid esters, silicon compounds, fluorine compounds, halogenated aromatic liquids, polyphenyl ethers and synthetic hydrocarbons.

3. An electro-rheological fluid as set forth in claim 2, wherein the electrically insulating liquid has a viscosity of 5 to 300 cp at 40°C.

4. An electro-rheological fluid as set forth in any one of claims 1 to 3, wherein the inorganic solid particle is selected from the group consisting of Si, Ge, Se, Te, SiC, GeSi, compounds of Ag or Cu with O or S, compounds of Mg, Zn, Cd or Hg with O, S, Se or Te, oxides of Al, La and Ce, compounds of Pb, Sn, Ti or Zr with O, S, Se or Te, compounds of Sb, Bi or Ta with O or S, oxides of Nb, W, Mo and Cr, $MnO_2$, oxides of Fe, Co and Ni, compounds of B, Al, Ga or In with N, P, As or Sb, $B_4C$, compounds of Zn or Cd with Sb or As, and $BaTiO_3$.

5. An electro-rheological fluid as set forth in claim 4, wherein the inorganic solid particle is selected from the group consisting of SiC, GeSi, compounds of Mg, Zn, Cd or Hg with O, S, Se or Te, oxides of Al, La and Ce, compounds of Pb, Sn, Ti or Zr with O, S, Se or Te, compounds of B, Al, Ga or In with N, P, As or Sb and $B_4C$.

6. An electro-rheological fluid as set forth in any preceding claim, wherein the inorganic solid particle has a particle size smaller than 10 $\mu$m.

7. An electro-rheological fluid as set forth in claim 6, wherein the inorganic solid particle has a particle size smaller than 1 $\mu$m.

8. An electro-rheological fluid as set forth in any preceding claim wherein the dispersing agent is selected from the group consisting of magnesium sulfonate, calcium sulfonate, calcium phenate, calcium phosphonate and polybutenyl succinic acid imide.

9. An electro-rheological fluid as set forth in any preceding claim wherein the dispersing agent is contained in an amount of 0.1 to 10% by weight based on the entire fluid.

**Patentansprüche**

1. Eine nicht-wäßrige elektro-rheologische Flüssigkeit, welche eine elektrisch isolierende Flüssigkeit als das Dispersionsmedium, dielektrische anorganische feine Partikel als die dispergierte Phase und ein Dispersionsmittel umfaßt, wobei das Gewichtsverhältnis der elektrisch isolierenden Flüssigkeit zu dem anorganischen Festpartikel von 95/5 bis 70/30 beträgt, der anorganische Festpartikel einen elektrischen Widerstandswert von $10^{-2}$ bis $10^{16}$ $\Omega$-cm, einschließlich eines Halbleiters, aufweist und das Dispersionsmittel ausgewählt wird aus der Gruppe bestehend aus: Sulfonaten, Phenaten, Phosphonaten und Succinimiden und Aminen.

**2.** Eine elektro-rheologische Flüssigkeit gemäß Anspruch 1, wobei die elektrisch isolierende Flüssigkeit ausgewählt wird aus der Gruppe bestehend aus:
Mineralölen vom Naphthentyp, Mineralölen vom Paraffintyp, Poly-α-Olefinen, Polyalkylenglykolen, Silikonen, Diestern, Polyolestern, Phosphorsäureestern, Siliciumverbindungen, Fluorverbindungen, halogenierten aromatischen Flüssigkeiten, Polyphenylethern und synthetischen Kohlenwasserstoffen.

**3.** Eine elektro-rheologische Flüssigkeit gemäß Anspruch 2, wobei die elektrische isolierende Flüssigkeit eine Viskosität von 5 bis 300 cp bei 40°C aufweist.

**4.** Eine elektro-rheologische Flüssigkeit gemäß irgendeinem der Ansprüche 1 bis 3, worin der anorganische Festpartikel ausgewählt wird aus der Gruppe bestehend aus:
Si, Ge, Se, Te, SiC, GeSi, Verbindungen von Ag oder Cu mit O oder S, Verbindungen von Mg, Zn, Cd oder Hg mit O, S, Se oder Te, Oxiden von Al, La und Ce, Verbindungen von Pb, Sn, Ti oder Zr mit O, S, Se oder Te, Verbindungen von Sb, Bi oder Ta mit O oder S, Oxiden von Nb, W, Mo und Cr, $MnO_2$, Oxiden von Fe, Co und Ni, Verbindungen von B, Al, Ga oder In mit N, P, As oder Sb, $B_4C$, Verbindungen von Zn oder Cd mit Sb oder As, und $BaTiO_3$.

**5.** Eine elektro-rheologische Flüssigkeit gemäß Anspruch 4, wobei der anorganische Festpartikel ausgewählt wird aus der Gruppe bestehend aus:
SiC, GeSi, Verbindungen von Mg, Zn Cd oder Hg mit O, S, Se oder Te, Oxiden von Al, La und Ce, Verbindungen von Pb, Sn, Ti oder Zr mit O, S, Se oder Te, Verbindungen von B, Al, Ga oder In mit N, P, As oder Sb und $B_4C$.

**6.** Eine elektro-rheologische Flüssigkeit gemäß irgendeinem der vorhergehenden Ansprüche, worin der anorganische Festpartikel eine Partikelgröße von kleiner als 10 $\mu$m aufweist.

**7.** Eine elektro-rheologische Flüssigkeit gemäß Anspruch 6, worin der anorganische Festpartikel eine Partikelgröße kleiner als 1 $\mu$m aufweist.

**8.** Eine elektro-rheologische Flüssigkeit gemäß irgendeinem der vorgehenden Ansprüche, worin das Dispersionsmittel ausgewählt wird aus der Gruppe bestehend aus:
Magnesiumsulfonat, Calciumsulfonat, Calciumphenat, Calciumphosphonat und Polybutenylbernsteinsäureimid.

**9.** Eine elektro-rheologische Flüssigkeit gemäß irgendeinem der vorhergehenden Ansprüche, worin das Dispersionsmittel enthalten ist in einer Menge von 0,1 bis 10 Gew.-%, basierend auf der gesamten Flüssigkeit.

**Revendications**

**1.** Un fluide électrorhéologique non-aqueux qui comprend un liquide électriquement isolant comme milieu de dispersion, une fine particule inorganique diélectrique comme phase dispersée et un agent dispersant, dans lequel le rapport en poids entre le liquide électriquement isolant et la particule solide inorganique est de 95/5 à 70/30, la particule solide inorganique a une valeur de résistance électrique de $10^{-2}$ à $10^{16}$ Ω-cm, comprenant un semi-conducteur, et l'agent dispersant est choisi parmi le groupe composé de sulfonates, phénates, phosphonates et succinimides et amines.

**2.** Un fluide électrorhéologique suivant la revendication 1, dans lequel le liquide électriquement isolant est choisi parmi le groupe composé des huiles minérales du type naphtène, huiles minérales du type paraffine, poly-α-oléfines, polyalkylèneglycols, silicones, diesters, esters de polyol, esters de l'acide phosphorique, composés de silicium, composés de fluor, liquides aromatiques halogénés, éthers polyphényliques et hydrocarbures synthétiques.

**3.** Un fluide électrorhéologique suivant la revendication 2, dans lequel le liquide électriquement isolant présente une viscosité de 5 à 300 cp à 40°C.

**4.** Un fluide électrorhéologique suivant l'une ou l'autre des revendications 1 à 3, dans lequel la particule solide inorganique est choisie parmi le groupe composé de Si, Ge, Se, Te, SiC, GeSi, composés d'Ag ou Cu avec O ou S, composés de Mg, Zn, Cd ou Hg avec O, S, Se ou Te, oxydes d'Al, La et Ce, composés de Pb, Sn, Ti ou Zr avec O, S, Se ou Te, composés de Sb, Bi ou Ta avec O ou S, oxydes de Nb, W, Mo et Cr, $MnO_2$, oxydes de Fe, Co et Ni, composés de B, Al, Ga ou In avec N, P, As ou Sb, $B_4C$, composés de Zn ou Cd avec Sb ou As, et $BaTiO_3$.

5. Un fluide électrorhéologique suivant la revendication 4, dans lequel la particule solide inorganique est choisie parmi le groupe composé de SiC, GeSi, composés de Mg, Zn, Cd ou Hg avec O, S, Se ou Te, oxydes d'Al, La et Ce, composés de Pb, Sn, Ti ou Zr avec O, S, Se ou Te, composés de B, Al, Ga ou In avec N, P, As ou Sb et $B_4C$.

6. Un fluide électrorhéologique suivant l'une ou l'autre des revendications précédentes, dans lequel la particule solide inorganioue présente une grosseur de particule inférieure à 10 $\mu$m.

7. Un fluide électrorhéologique suivant la revendication 6, dans lequel la particule solide inorganique présente une grosseur de particule inférieure à 1 $\mu$m.

8. Un fluide électrorhéologique suivant l'une ou l'autre des revendications précédentes, dans lequel l'agent dispersant est choisi parmi le groupe composé de sulfonate de magnésium, sulfonate de calcium, phénate de calcium, phosphonate de calcium et imide de l'acide polybuténylsuccinique.

9. Un fluide électrorhéologique suivant l'une ou l'autre des revendications précédentes, dans lequel l'agent dispersant est contenu en une quantité de 0,1 à 10% en poids sur base de l'ensemble du fluide.